# EUROPEAN PATENT APPLICATION

(11) **EP 4 841 237 A1**
(43) Date of publication of application: **18.11.2026**
(21) Application number: 25175809.0
(22) Date of filing: 12.05.2025
(51) Int. Cl.: G01N 15/1434, G01N 21/15

(54) **SYSTEM FOR CHARACTERISING PARTICLES**

(71) Applicant: Malvern Panalytical Limited, Malvern, Worcestershire WR14 1XZ (GB)
(72) Inventor: The designation of the inventor has not yet been filed
(74) Representative: Barker Brettell LLP

(57) **Abstract**

The present invention provides a system (10) for characterising particles. The system comprises a flow cell (100) for containing a sample comprising a plurality of particles, wherein the sample is suspended in a fluid; a light source (200) configured to illuminate the sample within a detection region (120) of the flow cell (100) via an illumination pathway; a detector (300) configured to detect light scattered or fluoresced by particles moving within the detection region (120) via a detection pathway; a processor configured to process the detected light for characterisation of the particles. The system further comprises a first window (150) separating the detector (300) or the light source (200) from the detection region (120); an air source (400) configured to supply air across the face of the first window (150) and purge particles from the first window (150); and a first plate (500, 600) disposed adjacent to the first window (150), the first plate (500, 600) configured to receive the air from the air source (400), and cause said air to swirl and purge particles from the first window (150).

## Description

### TECHNICAL FIELD

The present invention relates to a system for characterising particles and an apparatus for use with a particle characterisation system.

### BACKGROUND

A particle characterisation system, such as a laser diffraction system, typically includes a flow cell through which flows a fluid holding a sample comprising particles to be characterised. The flow cell is designed to maximise flow of the particles through a detection region, in which the particles scatter or fluoresce light from a light source provided along an illumination pathway. The scattered/fluoresced light is detected by a detector via a detection pathway. However, these particles can get re-entrained along the detection or illumination pathway. Re-entrainment may occur due to particleparticle interactions, or particles contacting the wall of the flow cell and rebounding. These entrained particles can contaminate windows separating the light source and/or the detector from the detection region. The windows may also be displaced from the detection region along the illumination/detection pathway, with cavities extending between the windows and the flow cell. These may be referred to as window cavities, and generally extend perpendicular to the flow cell. Accumulation of these particles can negatively affect the accuracy of measurements made using the particle characterisation system, by increasing the background noise component and reducing the signal-noise ratio. The systems then require maintenance, which reduces the process efficiency due to stoppages for maintenance to be performed.

Prior art systems seek to address this issue by supplying fluid (such as compressed air) through additional ports across the face of the window. This reduces the likelihood of the particles contacting and contaminating the windows and acts to displace particles that are contacting/contaminating the window, which in turn reduces the need for regular maintenance. Such ports are typically referred to as purges, and act to purge particles from the windows. However, this prior art system increases the energy and fluid requirements of the particle characterisation system. Additionally, supplying fluid from the edges of the window encourage the purged particles into the centreline of the illumination and detection pathways. This means that the particles may cross the axis of the light from the light source when moving from the window, and provide additional interactions (scattering or fluorescing) with the light from the light source within the window cavities. This also negatively affects the accuracy of measurements made using the system by introducing additional scattering signals.

The present invention aims to at least ameliorate the above-mentioned problems.

### SUMMARY

According to a first aspect of the present invention, there is provided a system for characterising particles. The system comprises a flow cell for containing a sample comprising a plurality of particles, wherein the sample is suspended in a fluid; a light source configured to illuminate the sample within a detection region of the flow cell via an illumination pathway; a detector configured to collect light scattered or fluoresced by particles within the detection region via a detection pathway; and a processor configured to process the detected light for characterisation of the particles..

The system further comprises a first window separating the detector or the light source from the detection region; an air source configured to supply air across the face of the first window and purge particles from the first window; and a first plate disposed adjacent to the first window, the first plate configured to receive the air from the air source, and cause the air to swirl and purge particles from the first window.

Advantageously, providing a swirling airflow encourages particles to exit the window away from the centreline. This reduces the additional interactions with the light from the light source. Previous flowpaths of the compressed air entering at the edges of the window was at least substantially radial, to provide the shortest flowpath across the face of the plate and retain airspeed. However, this encouraged particles to cross the centreline of either the illumination pathway or the detection pathway, increasing unwanted interactions with the particles and reducing signal quality.

The term "swirl" is intended to illustrate the twisting or spiralling motion of the air (and by extension the purged particles) after flowing across the face of the plate, in contrast to a radial airflow, or substantially central flow along the direction of the illumination and/or detection pathway.

The fluid in which the sample is suspended may be air, in particular compressed air drawn by a vacuum line. The air supplied by the air source may be compressed air.

The first plate may comprise a body having a central aperture, and a plurality of channels extending tangentially from the aperture.

Advantageously, having a body with an aperture and at least one channel reduces the surface of the window that can be contacted and contaminated by the entrained particles whilst still allowing the light from the light source to pass through to/from the detection region.

The first plate may comprise a plurality of channels extending from the aperture, each channel having a tangential direction component.

Advantageously, a plurality of channels allows for airflow to be receiving by the plate at more than one position around the edge of the plate. This may provide the same or similar volume of air to be used, whilst covering a greater surface area of the window or providing the air at a higher velocity (i.e. the individual channels may be able to be provided with a narrower cross-section and cover the same or greater surface area of the window).

The arrangement of the at least one channel or plurality channels having a tangential direction component and aperture also reduces the cross-sectional flow of the air compared to the prior art systems. Air enters the at least one channel or channels, and so the flow is restricted to the width of the at least one channel. This narrower airstream encourages faster moving air from the same air flow originating from the purge compared to these earlier systems. This provides a more efficient and effective purge, by reducing energy and compressed air requirements to achieve a similar air speed.

A greater number of channels may advantageously enable a greater surface area of the optical window to be cleaned. The number of channels in an arrangement may be a compromise between structural integrity, machining and assembly requirements and surface area to be purged.

The or each of the channel(s) having a tangential direction component may have a width ranging from 0.5mm to 5mm. The channel width may be consistent such that each channel in the plate has the same width and orientation. The channel width may be between 0.5mm to 1mm, 1mm to 2mm, 2mm to 3mm, 3mm to 4mm, or 4mm to 5mm or any combination thereof (e.g. a width of between 0.5mm and 3mm). The or each channel may have a depth of 0.5mm to 1mm, or over 1mm.

The central aperture of the plate may have a diameter of at least twice the diameter of the illumination beam from the light source. The central aperture defines the maximum angle scatter that can pass through the first window to the detector. The bigger the aperture. the greater range of angle scattering that can be measured and the smaller the particle sizes that can be detected. However, the bigger the aperture the lower intensity of the swirled air and effectiveness of the purge for a fixed volume of air provided.

The ratio of the diameter of the central aperture and the illumination beam may be between 2:1 and 3:1. The ratio of the diameters may be up to 4:1. Alternatively, the ratio of the diameters may be between 1:1 and 2:1. The diameter of the central aperture may be defined in absolute sizes, and may be 20mm. The diameter of the central aperture may be between 10 and 20mm, or may be greater than 20mm. The diameter of the central aperture may be between 20mm and 40mm, for example 30mm.

The first plate may comprise a frusto-conical protrusion defining the perimeter of the central aperture.

This arrangement contributes to the swirl imparted on the air by the present invention. The air enters the window area from the edge of the plate, and its flow path is directed by the at least one channel(s) and frusto-conical protrusion. The at least one channel having a tangential direction component provides a substantially tangential component to the velocity of the air acting on the plate, such that it swirls around the plate. On impacting the protrusion, the air is directed away from the plate whilst retaining at least some of the tangential component of its velocity. These directional components may combine to provide the swirling motion of the air in the particle characterisation system.

The plate may be disposed against the window such that the body of the plate sits flush against the window. However, the orifice of the central aperture (i.e., defined by the perimeter of the frusto-conical protrusion) may be offset relative to the window. The orifice may be offset up to 30mm from the surface of the window. The orifice may be offset approximately 10mm from the surface of the window, 10-15mm from the surface of the window, or any of 0mm (i.e. no offset with no frusto-conical protrusion) to 30mm. **In** an example, the orifice may be offset 13.2mm from the surface of the window. The offset distance may be defined relative to the diameter of the illumination beam and may be 0 to 4 times the diameter.

Advantageously, an increased offset (which may also be defined as height of the protrusion relative to the body of the plate) increases the surface area of the plate which can guide the flow of air across the plate, and swirl the air to follow a helical path away from the plate and window. Further advantageously, increased offsets allow for wider light scatter angles for a fixed aperture diameter. This in in turn allows for measuring smaller particles for a fixed aperture diameter.

The body of the plate may comprise a plurality of further apertures disposed circumferentially around the central aperture. The plate may comprise a plurality of inserts. These inserts may be received within the further apertures and have a thickness greater than a thickness of the body of the plate such that they extend from the plane of the body of the plate and define the plurality of channels.

The body of the plate may be produced from a rigid material, such as steel, aluminium alloys, or a rigid plastics material such as polycarbonate. Advantageously, the body of the plate may be wear-resistant and as such require only infrequent maintenance/replacement from the impact of the compressed airflow across the face of the plate.

The inserts may be produced from a soft material. The inserts may be larger than the apertures in which they are received, such that they are retained with an airtight seal by a compressive force.

Materials may be selected for the body of the plate and/or the inserts for operation of the instrument in temperatures above ambient temperature. Materials may be selected in order to operate in environments up to 70 degrees Celsius.

Materials described as "soft" may include rubbers, such as Ethylene Propylene Diene Monomer (EDPM), or resins, such as high strength flexible polyurethane.

The body of the plate may comprise soft material at the perimeter of the plate, and/or soft components for use with fastening/fixing the plate in place relative to the instrument. Advantageously, this reduce the risk of overtightening and damaging the plate or the separation windows (e.g., scratching or fracturing the windows when assembling the instrument or retro-fitting the plate).

It is envisaged that the inserts are sufficiently elastically deformable that they can be received by the under-sized apertures of the body of the plate. This arrangement advantageously reduces tolerance requirements of the inserts. It further advantageously reduces risk of the glassware of the system that retains the plates being stretched by movement of the plate under stress imparted by the compressed air: this stress would be imparted on the softer inserts, which would at most exhibit some elastic strain.

Additionally, the insert-aperture arrangement provides for straightforward machining of both the body of the plate and the inserts. It is anticipated that assembly (i.e., placing the inserts in the apertures) would be sufficiently straightforward that it could be performed by an end user, and allows for replacement and cleaning of individual components where necessary rather than wholesale replacement.

Further advantageously, providing relatively-oversized inserts provides an airtight seal between the body of the plate and the insert without the need to machine a shoulder to retain the inserts against the body of the plate.

The plurality of inserts and further apertures may have a substantially triangular profile.

By profile of the inserts and apertures, it is meant the shape of the components when viewed as part of the face of the plate. Triangular shapes are structurally sound and easy to machine. Additionally, a plurality of tangential channels can be easily provided by a series of repeating triangles arranged around the central aperture, rather than bespoke patterns or shapes being required.

Alternatively, the plate may comprise a plurality of protrusions extending from the body of the plate and disposed circumferentially around the central aperture. These protrusions may instead define the plurality of tangential channels.

Advantageously, providing a single component in the form of the plate and protrusions provides ease of manufacture and replacement. An end user can replace a single component, when necessary, rather than having to disassemble/reassemble. A single machined component also removes the need for consideration of the airtight seals or the like. A unitary part may also have greater structural integrity compared to a body with inserts.

The protrusions may be formed from an overmould layer disposed against the body of the plate. The overmould layer may be a soft material, similar to the inserts described above. This provides the advantages outlined above, in that the plate is provided as a single component. Further advantageously, this may reduce the tolerance requirements of the plate dimensions and reduce likelihood of damage to the instrument when installing the plate.

Alternatively, the protrusions may be formed by directly machining the body of the plate to provide a protrusion-channel arrangement.

The faces of the plurality of protrusions may be substantially triangular. As discussed with reference to the insert-aperture arrangement, this shape provides structural and machining advantages.

The plate may be a ring shaped to fit against a circular separation window, and the central aperture may be substantially circular.

Advantageously, the substantially circular aperture may act to reinforce the swirling pathway already encouraged by the plate. Additionally, the ring-shaped plate provides compatibility with existing systems in case of retrofitting or maintenance requirements.

The first window may separate the detector from the detection region, and the system may further comprise a second window separating the light source from the detection region. The system may further comprise a second air source configured to supply air to the second window and purge particles from the window; and a second plate disposed adjacent to the second window, the second plate configured to receive the air from the air source, and cause the air to swirl and purge particles.

The second plate may comprise some or all of the optional features of the first plate. It can be appreciated that the advantages associated with the first plate equally apply to the second plate.

According to a second aspect of the invention, there is provided an apparatus for use with a particle characterisation instrument. The apparatus comprises a plate having an aperture and at least one having a tangential direction component extending from the central aperture. The plate is configured to be disposed adjacent to a separation window of the particle characterisation instrument, wherein the separation window separates the detector or the light source from the detection region.

The plate may comprise a frusto-conical protrusion defining the perimeter of the central aperture.
The frusto-conical protrusion may define the orifice of the central aperture. This may be offset relative to the plane of the body of the plate (such that it is offset relative to the surface of the window when the plate sits flush against the window). The orifice may be offset up to 30mm from the surface of the window when the plate is flush against the window. The orifice may be offset approximately 10mm from the surface of the window, 10-15mm from the surface of the window, or any of 0mm (i.e. no offset with no frusto-conical protrusion) to 30mm. In an example, the orifice may be offset 13.2mm from the surface of the window. The offset distance may be defined relative to the diameter of the illumination beam and may be 0 to 4 times the diameter.

As discussed above, an increased offset distance (which may also be defined as height of the protrusion relative to the body of the plate) increases the surface area of the plate which can guide the flow of air across the plate and swirl the air to follow a helical path away from the plate and window. Further advantageously, increased offsets allow for wider light scatter angles for a fixed aperture diameter. This in in turn allows for measuring smaller particles for a fixed aperture diameter.

The body of the plate may comprise a plurality of further apertures disposed circumferentially around the central aperture. The apparatus may further comprise a plurality of inserts, wherein the inserts are received within the shaped apertures of the plate and have a thickness greater than a thickness of the body of the plate. As such, the inserts extend from the plane of the body of the plate to define the at least one channel having a tangential direction component.

Alternatively, the plate may comprise a plurality of protrusions extending from the body of the plate and disposed circumferentially around the aperture, the protrusions defining at least one channel having a tangential direction component.

The plate of the second aspect of the present invention may comprise each of the features and associated advantages discussed with respect to the plate as forming part of the system of the first aspect of the present invention.

According to a third aspect of the present invention, there is provided a method of operating a particle characterisation instrument. The method comprises flowing a sample comprising particles to be characterised through a detection region of a flow cell of a particle characterisation instrument; illuminating the sample with light from a light source via an illumination pathway; detecting scattered or fluoresced light from the particles within the detection region with a detector, via a detection pathway; processing the detected light to characterise the particles; and supplying a flow of air from an air source to a first window separating the detector or the light source from the detection region to purge particles from the window, wherein the particle characterisation instrument comprises a first plate disposed against the first window; and the first plate is configured to receive the flow of air from the air source and cause the air to swirl and purge particle from the first window.

It will be appreciated that any optional feature, alternative or advantage applicable to the first aspect of the invention may also be applicable to the second aspect of the invention and the third aspect of the invention (and vice versa).

These and other aspects of the invention will be apparent from, and elucidated with reference to, the embodiments described hereinafter.

Although embodiments of the invention are described herein with reference to laser diffraction, it will be appreciated that methods and techniques according to embodiments of the invention may be applicable to any suitable means of particle characterisation which involves a flow of sample between a light source and detector.

### BREIF DESCRIPTION OF DRAWINGS

Embodiments of the invention will now be described, by way of example only, with reference to the accompanying drawings:
Figure 1 illustrates a particle characterisation instrument;
Figure 2 illustrates a magnified view the particle characterisation instrument of Figure 1, illustrating example particle pathways;
Figures 3a to 3c illustrate an example apparatus according to embodiments of the present invention;
Figures 4a to 4c illustrate an example apparatus according to embodiments of the present invention;
Figure 5a illustrates the magnified view the particle characterisation instrument of

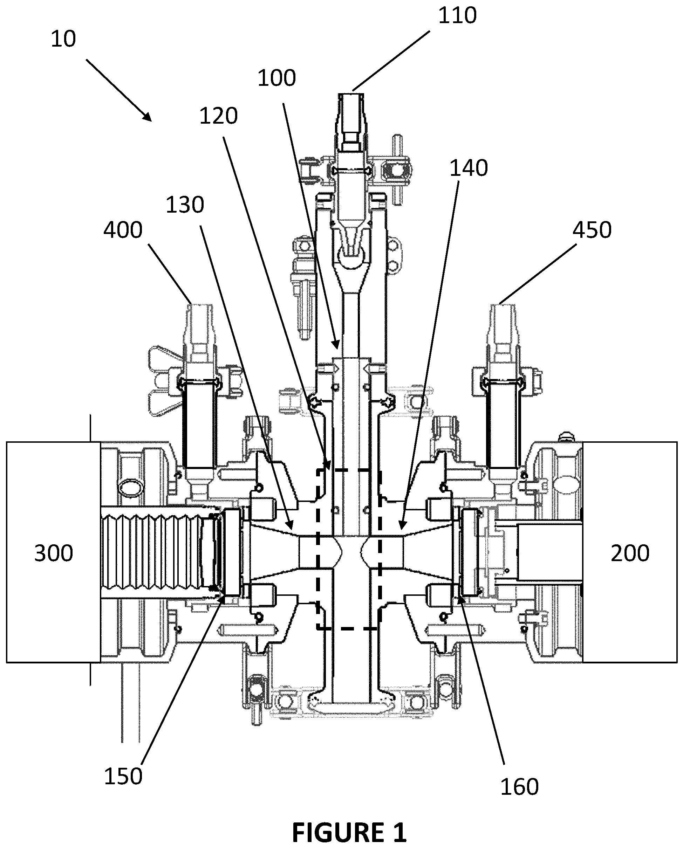

Figure 1, illustrating prior art purge airflow pathways;

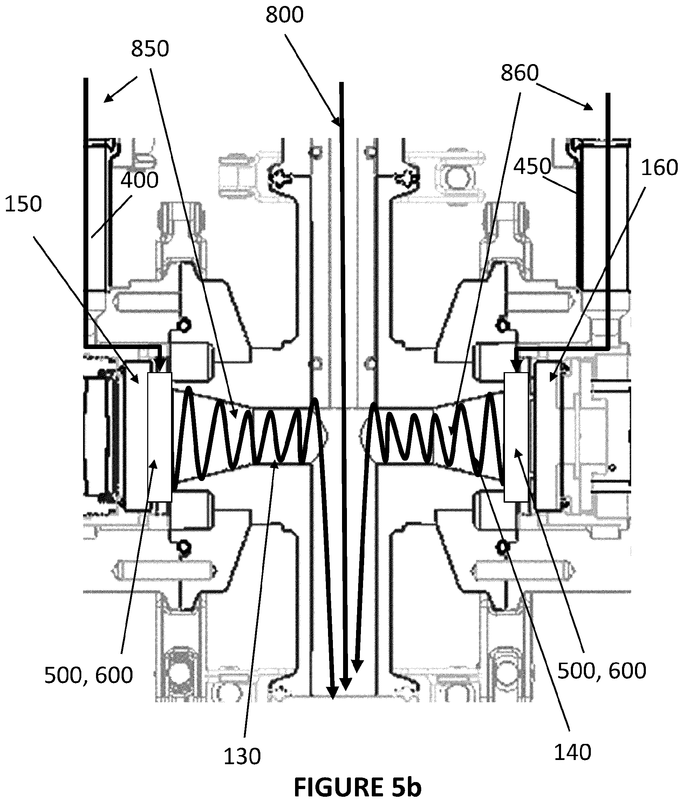

Figure 5b illustrates the magnified view the particle characterisation instrument of
Figure 1 adapted according to the present invention, illustrating improved purge airflow pathways;

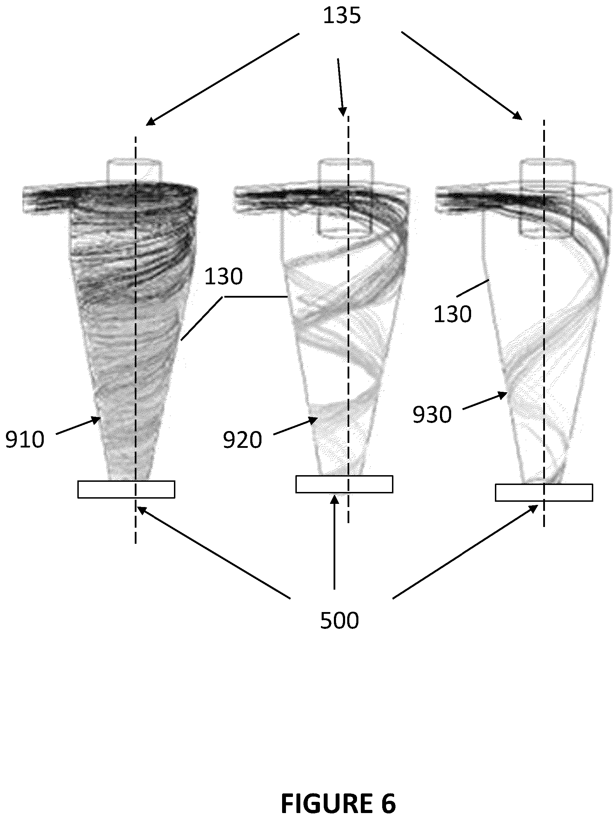

Figure 6 illustrates example particle tracks; and

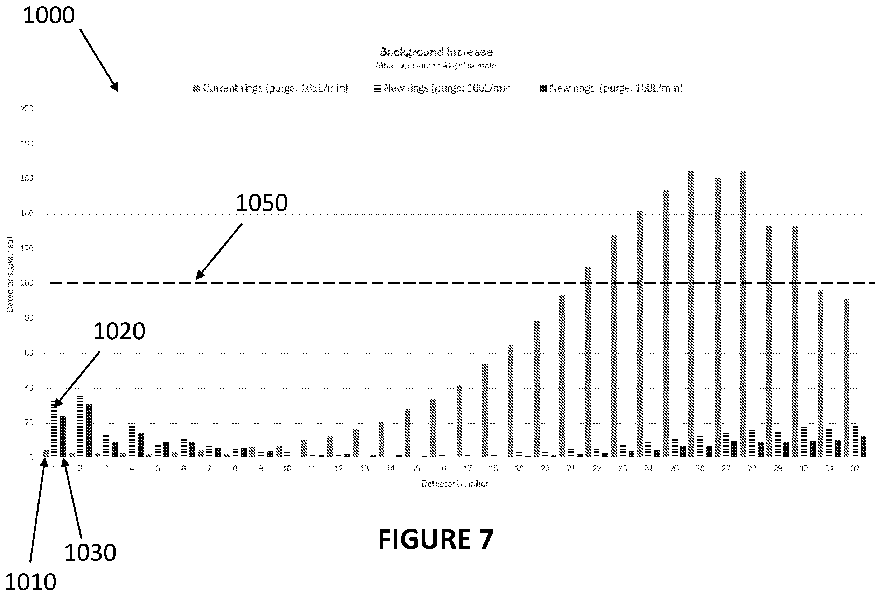

Figure 7 illustrates background signal levels in a particle characterisation instrument, comparing a prior art system to the present invention.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### DETAILED DESCRIPTION

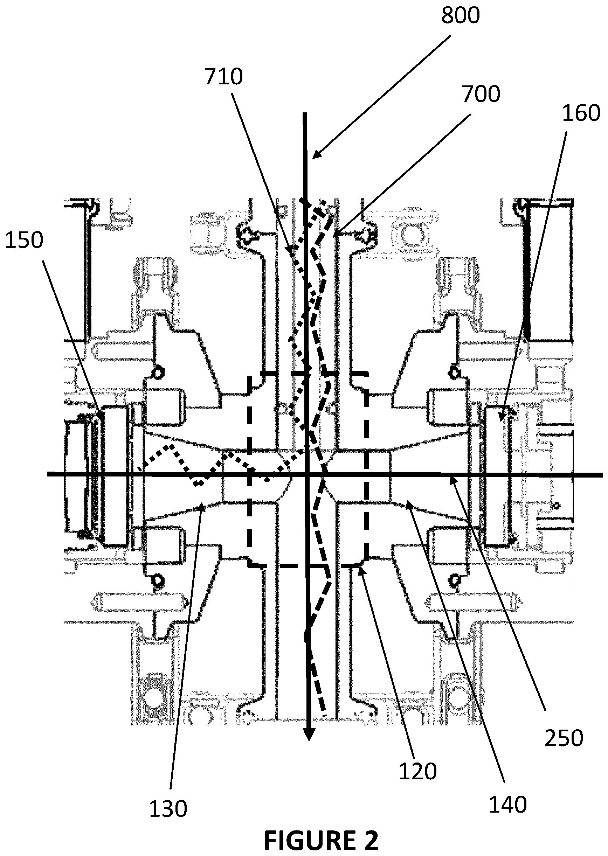

Figures 1 and 2 illustrate a particle characterisation instrument 10. The illustrated particle characterisation instrument 10 is a laser diffraction system, and comprises a flow cell 100, a light source 200 and detector assembly 300. Sample, comprising particles suspended in a fluid passes through a detection region 120. The particles interact with an illumination beam 250 from the light source 200 within the detection region. The light is scattered or fluoresced by the particles. The scattered/fluoresced light is then collected by the detector assembly 300, and processed for particle characterisation.

The sample is urged through the detection region 120 by a venturi jet 110, which creates the primary flow path 800. A portion of the particles travel along example pathway 700, passing through detection region without incident. A portion of the particles, however, get re-entrained in one of a first cavity 130 or a second cavity 140 as indicated by example particle pathway 710. The first cavity 130 and second cavity 140 lie along the detection pathway and illumination pathway of the particle characterisation instrument 10 respectively and are perpendicular to the primary flow path 800. A first separation window 150 separates the first cavity 130 from detector assembly 300. A second window 160 separates the second cavity 140 and the light source 200. Particles re-entrained into the first cavity 130 and second cavity 140 can contact the first separation window 150 or the second separation window 160 respectively, contaminating the windows 150, 160 and negatively affecting the accuracy of measurements made using the particle characterisation instrument 10, by increasing the background noise component and reducing the signal-noise ratio of detected signals.

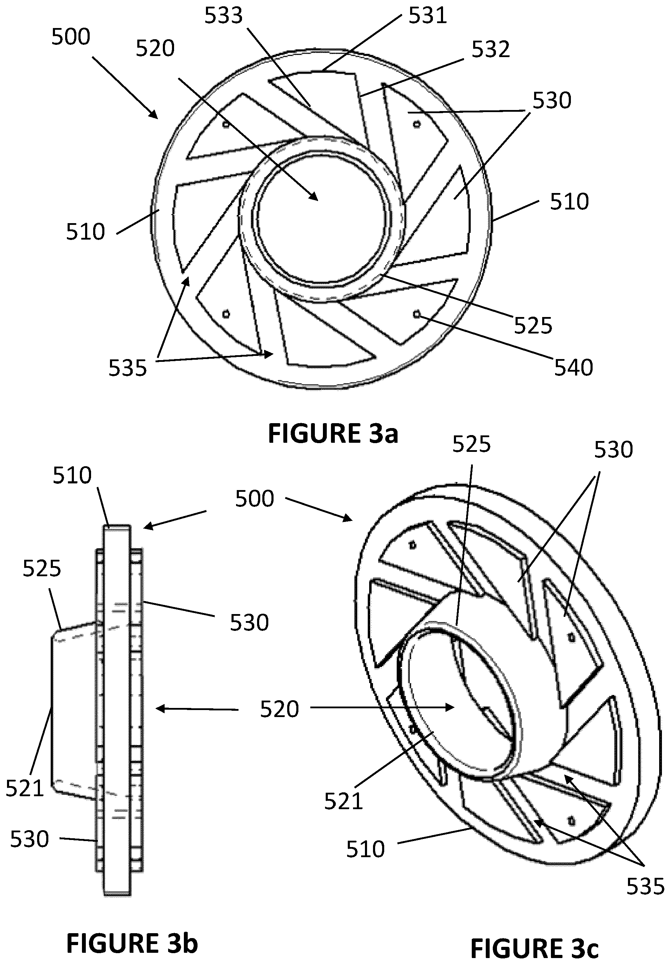

Figures 3a to 3c illustrate a plate 500 for use with the particle characterisation instrument 10. Figure 3a illustrates a front view of the plate 500. Figure 3b illustrates a side view of the plate 500. Figure 3c illustrates a perspective view of the plate 500. The plate 500 is configured to be either be disposed adjacent to one or each of the first and second separation windows 150, 160, and receive air from one or each of the purge ports 400, 450 respectively. As illustrated in Figure 5b, the plate 500 acts to swirl the air in the first and second cavities 130, 140 respectively. For ease of reference, the plate 500 will be discussed with reference to the first separation window 150 and first cavity 130. The discussion equally applies to the second separation window 160 and second cavity 140.

Plate 500 comprises a body 510 having a central aperture 520. In the illustrated embodiment, the body 510 of the plate 500 is a ring. It is anticipated that the body 510 of the plate 500 would be shaped to fit in the particle characterisation instrument 10 to which it is being incorporated such that it matches the separation window 150. The central aperture 520 is circular, with the perimeter defined by a frusto-conical rim 525 extending from the body 510 of the plate 500. The perimeter of the aperture 520 may also be referred to as the aperture orifice 521. In the illustrated example, the aperture orifice 521 is offset relative to the body 510 of the plate 500 by the height of the rim 525. A plurality of protrusions 530 extend from the body 510 of the plate 500, disposed radially around the rim 525. These protrusions 530 define a plurality of tangential channels 535. This geometry of the rim 525 and tangential channels 535 contribute to the swirling motion imparted on the air passing across the body 510 of the plate 500.

Each protrusion 530 has a substantially triangular profile. A first edge 531 of the triangle profile nearest the rim 515 of the body 510 of the plate 500 may be curved so as to be parallel to the rim of the plate 500. This may provide an easier design and machining process. The other edges of the triangular profile protrusion 530 define the tangential channels 535, with a second edge 532 of each protrusion lying parallel to the third edge 533 of the clockwise-adjacent protrusion (i.e., a channel 535 between two protrusions 530 is defined by two parallel edges). The plate 500 has a rotational symmetry of *nₚ,* wherein *nₚ* is the number of protrusions disposed around the rim 525 of the aperture 520.

In the illustrated example, the plate 500 comprises eight tangential channels 535. A balance should be considered between increased surface area of the window 150 that can be purged against machining and assembly considerations. Eight channels 535 (and so eight protrusions 530) allows for the provision of key holes 540 as illustrated. These key holes 540 engage the tool that fixes the plate 500 in place with the rest of the instrument 10. In the illustrated example, these key holes 540 pass through the protrusions 530.

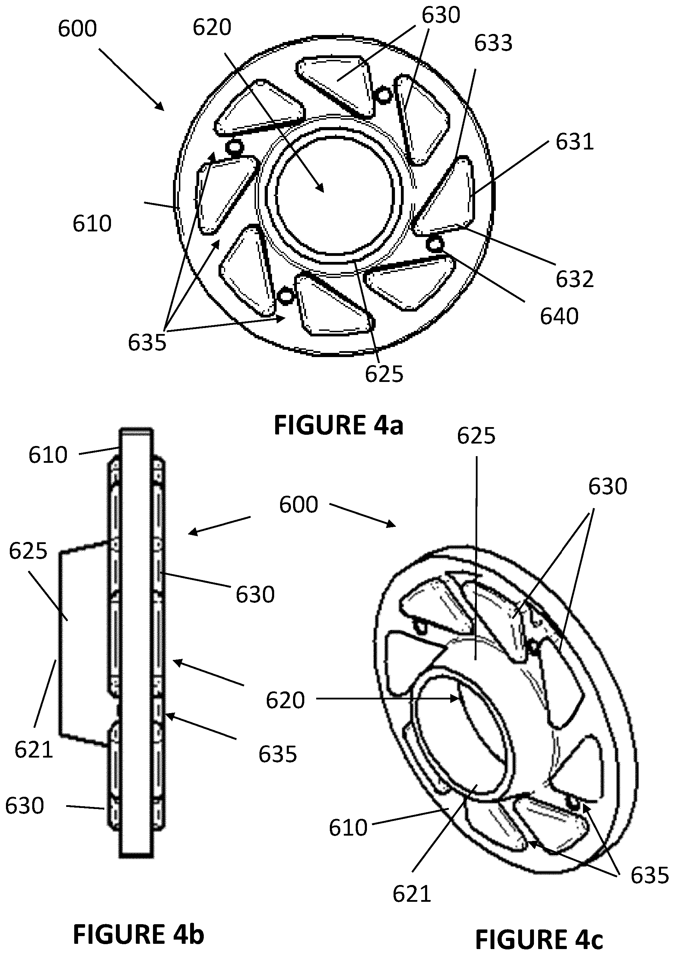

Figures 4a to 4c illustrate an alternative plate 600. Figure 4a illustrates a front view of the plate 600. Figure 4b illustrates a side view of the plate 600. Figure 4c illustrates a perspective view of the plate 600. Plate 600 performs the same function in particle characterisation instrument 10 as plate 500, and shares several of the same features.

Similar to plate 500, plate 600 comprises a body 610 with a central aperture 620 having a frusto-conical protrusion 625 defining its rim and the aperture orifice 621.

In contrast with plate 500, plate 600 utilises inserts 630 in the place of protrusions 530. Rather than a unitary component, the plate instead comprises the body 610 and retained inserts 630. The inserts are formed of a softer material than the body 610 of the plate 600 such as a plastics material like EDPM , and are retained within apertures (not pictured) in the body 610 of the plate 600. These apertures may be smaller than the inserts 630, such that the inserts 630 are retained in place with a seal between the inserts 630 and the body 610 of the plate 600. The inserts 630 have a greater thickness than the body 610 of the plate 600, as can be seen in Figure 4b, such that the seal can be maintained without the need for a shoulder extending from each insert 630.

These inserts 630 are radially disposed around the central aperture 620 and perform the same function as the protrusions 530 in plate 500. The geometry of the inserts 630 is similar to that of the protrusions, as are the relative positions of the edges 631, 632, 633 of the inserts 630 to define the tangential channels 635.

In the illustrated example, the plate 600 comprises eight tangential channels 635. Eight channels 635 (and so eight inserts 630) allows for the provision of key holes 640 as illustrated. These key holes 640 engage the tool that fixes the plate 600 in place with the rest of the instrument 10. In the illustrated example, these key holes 640 are disposed in the channels 635.

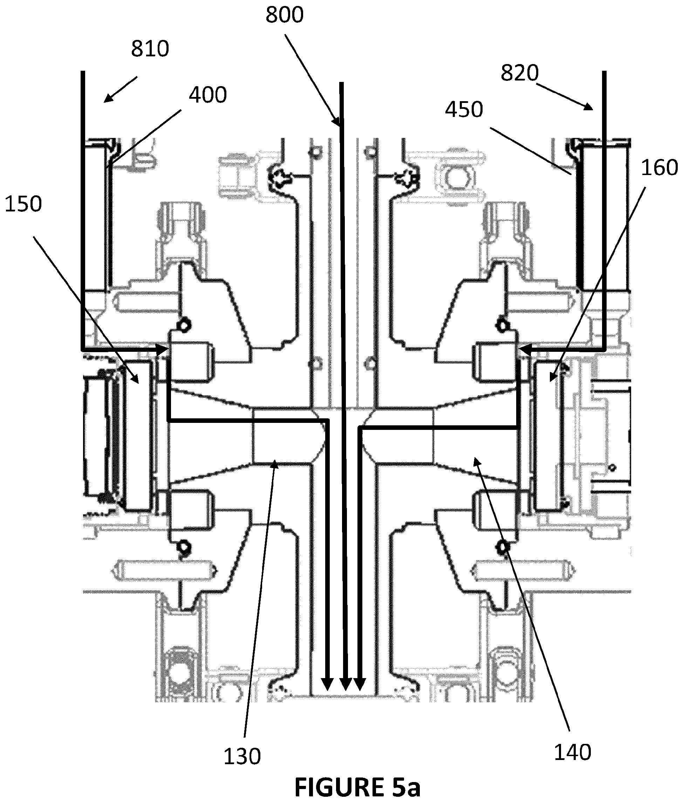

Figure 5a illustrates the particle characterisation instrument 10 of Figures 1 and 2, with prior art purge airflow pathways 810, 820 indicated. This airflow is introduced into the instrument 10 through additional ports 400, 450 respectively, known as purges. In the illustrated example, the airflow pathways enter at the edge of the separation windows 150, 160 and displace particles off the surface of the windows 150, 160. The purge airflow 810, 820 is directed along the first and second cavities 130, 140 against potential incoming particles (e.g. those travelling along example pathway 710). This acts to reduce the number of particles contaminating the separation windows 150, 160. As discussed in the Background of the Invention, these pathways encourage particles to cross the axis of the illuminating beam 250 as they exit the cavities 130, 140. This generates additional signals, increasing background noise and reducing the accuracy of the particle characterisation instrument 10.

Figure 5b illustrates the particle characterisation instrument 10 of Figures 1 and 2, modified in accordance with embodiments of the present invention. A plate 500 (Figures 3a-c) is disposed against each of the first and second separation windows 150, 160, It can be appreciated that the same or a similar effect would be produced by introducing plate 600 (Figures 4a-c) in the place of plate 500. Improved purge airflow pathways 850 and 860 are introduced via purge ports 400, 450 as before. In the example of Figure 5b, the air is across the face of the plate 500 at the edge of the body 510 of the plate 500. The plate 500 causes the air to swirl along the length of the first and second cavities 130, 140 as illustrated by purge airflow pathways 850, 860. As an alternative, a plate 500 may only be disposed against one of the first or second separation windows 150, 160.

Figure 6 illustrates example particle tracks along the length of the first cavity 130 when the particle characterisation instrument 10 includes plate 500 (or 600). It can be appreciated that the same follows for plate 600, or second cavity 140. Example tracks 910 illustrates particle tracks where the particle size is 10 microns. Example tracks 920 illustrates particle tracks where the particle size is 50 microns. Example tracks 920 illustrates particle tracks where the particle size is 100 microns. It can be observed in each example that the swirl of the air generated by the purge airflow 850 interacting with the plate 500 encourages particles to particles travel along the walls of the cavity 130, rather than the centreline 135. This reduces interference with the illumination beam 250 (Figure 2) and improves the quality of data obtained from the particle characterisation instrument 10.

Figure 7 is a chart illustrating the increase in background signal levels for a particle characterisation instrument 10, after exposure to 4kg of sample passing through the detection region 120 of the particle characterisation instrument 10. It is desirable for increase in background detector signal levels to be lower than 100 au in this instance, as indicated by threshold 1050. Data set 1010 illustrates the values at each of detectors 1 to 32 for a prior art purge system, with an airflow rate of 165L/min. Data set 1020 illustrates the values at each of detectors 1 to 32 for a particle characterisation system using a plate 500 disposed against separation window 150 in accordance with embodiments of the present invention, with an airflow rate of 165L/min. Data set 1030 illustrates the values at each of detectors 1 to 32 for a particle characterisation system using a plate 500 disposed against separation window 150 in accordance with embodiments of the present invention, with an airflow rate of 150L/min. Both data sets 1020 and 1030 show a significant improvement across the detector array compared to data set 1010. This illustrates that improved signal accuracy even with a reduced airflow rate through the purge ports 400, 450. Nearly 25% of the detectors demonstrate background signal level increases higher than the threshold 1050 in the prior art system, and none when using plate 500 at either airflow rate.

From reading the present disclosure, other variations and modifications will be apparent to the skilled person. Such variations and modifications may involve equivalent and other features which are already known in the art of particle characterisation, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, and reference signs in the claims shall not be construed as limiting the scope of the claims.

## Claims

1. A system for characterising particles, comprising:
a flow cell for containing a sample comprising a plurality of particles, wherein the sample is suspended in a fluid;
a light source configured to illuminate the sample within a detection region of the flow cell via an illumination pathway;
a detector configured to detect light scattered or fluoresced by particles within the detection region via a detection pathway;
a processor configured to process the detected light for characterisation of the particles;
a first window separating the detector or the light source from the detection region;
an air source configured to supply air across the first window and purge particles from the window; and
a first plate disposed adjacent to the first window, the first plate configured to receive the air from the air source, and cause the air to swirl and purge particles from the first window.

2. The system of claim 1, wherein the first plate comprises:
a body having a central aperture; and
at least one channel extending from the aperture, the channel having a tangential direction component.

3. The system of claim 2, wherein the first plate comprises:
a plurality of channels extending from the aperture, each channel having a tangential direction component.

4. The system of claim 2 or claim 3, wherein the light source illuminates the sample with an illumination beam, and the aperture diameter is at least twice the diameter of the illumination beam.

5. The system of claim 2, claim 3 or claim 4, wherein the first plate comprises a frusto-conical protrusion defining the perimeter of the central aperture.

6. The system of claim 5, wherein the light source illuminates the sample with an illumination beam, and the opening of the central aperture is offset from the first window up to 4 times the diameter of the illumination beam.

7. The system of any preceding claim, wherein:
the body of the plate comprises a plurality of further apertures disposed circumferentially around the central aperture; and
the plate comprises a plurality of inserts, wherein the inserts are received within the further apertures and have a thickness greater than a thickness of the body of the plate such that they extend from the plane of the body of the plate to define the at least one channel.

8. The system of claim 7, wherein the inserts are produced from a soft material and are larger than the further apertures in which they are received, such that they are retained with an airtight seal.

9. The system of any of claims 1 to 6, wherein the plate comprises a plurality of protrusions extending from the body of the plate and disposed circumferentially around the aperture, the protrusions defining at least one channel.

10. The system of claim 9, wherein the plurality of protrusions are formed from an overmould layer disposed against the body of the plate.

11. The system of claim 9 or claim 10, wherein the faces of the plurality of protrusions are substantially triangular.

12. The system of any of claims 2 to 11, wherein:
the plate is a ring; and
the central aperture is substantially circular.

13. The system of any preceding claim, wherein:
the first window separates the detector from the detection region; and
the system further comprises:
a second window separating the light source from the detection region;
a second air source configured to supply air to the second window and purge particles from the second window; and
a second plate disposed adjacent to the second window, the second plate configured to receive the air from the air source, and cause the air to swirl and purge particles from the detection pathway and second window.

14. An apparatus for use with a particle characterisation instrument, comprising:
a plate comprising a central aperture optionally comprising a frusto-conical protrusion defining the perimeter of the central aperture; and
at least one channel extending from the central aperture, the at least one channel having a tangential direction component;
wherein the plate is configured to be disposed adjacent to a separation window of the particle characterisation instrument.

15. A method of operating a particle characterisation instrument, the method comprising:
flowing a sample comprising particles to be characterised through a detection region of a flow cell of a particle characterisation instrument;
illuminating the sample with light from a light source via an illumination pathway;
detecting scattered or fluoresced light from the particles within the detection region with a detector, via a detection pathway;
processing the detected light to characterise the particles; and
supplying a flow of air from an air source to a first window separating the detector or the light source from the detection region to purge particles from the window;
wherein:
the particle characterisation instrument comprises a first plate disposed against the first window; and
the first plate is configured to receive the flow of air from the air source and cause the air to swirl and purge particle from the first window.
